# EUROPÄISCHE PATENTSCHRIFT

(11) **EP 1 514 336 B1**
(45) Veröffentlichungstag und Bekanntmachung des Hinweises auf die Patenterteilung: **04.09.2013**
(21) Anmeldenummer: 03757004.1
(22) Anmeldetag: 28.05.2003
(51) Int. Cl.: H02J 5/00, B60L 11/18, B60P 3/00, B63B 25/00, B63B 35/00

(54) **VERFAHREN ZUM TRANSPORTIEREN ELEKTRISCHER ENERGIE**
METHOD FOR TRANSPORTING ELECTRIC ENERGY
PROCEDE POUR TRANSPORTER DE L'ENERGIE ELECTRIQUE

(30) Priorität: 05.06.2002 DE 10224808
(43) Veröffentlichungstag der Anmeldung: 16.03.2005
(73) Patentinhaber: Wobben Properties GmbH, 26605 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2003/005619
(87) Internationale Veröffentlichungsnummer: WO 2003/105307

(56) Entgegenhaltungen:
- EP-A- 1 201 485
- WO-A-92/03869
- WO-A-03/062018
- WO-A1-00/49698
- DE-A- 4 422 005
- DE-C- 19 722 644
- US-A- 5 960 898
- US-A- 6 127 798
- US-B1- 6 384 569

## Beschreibung

Die vorliegende Erfindung betrifft eine Vorrichtung und ein Verfahren zum Transportieren elektrischer Energie. Als solche Vorrichtungen werden fast ausnahmslos elektrische Leiter verwendet. Zum Transport über größere Entfernungen sind diese elektrischen Leiter jedoch nur bedingt geeignet, da die Verluste in diesen Leitern mit zunehmender Länge ansteigen und einen Energietransport bei großen Entfernungen unwirtschaftlich machen.

Alternativ wird elektrische Energie verwendet, um einen chemischen Vorgang wie eine Elektrolyse auszuführen, die zu einer gewünschten Substanz wie z B. Wasserstoff führt. Diese Substanz kann zu einem Zielort transportiert werden und dort durch eine geeignete Vorrichtung wie z. B. eine Brennstoffzelle wieder in elektrische Energie umgewandelt werden. Hierbei wird jedoch nicht elektrische Energie sondern ein Energieträger transportiert, dessen Erzeugung einerseits und dessen Umwandlung in elektrische Energie andererseits verlustbehaftet ist.

Weiterhin ist es seit langem bekannt, elektrische Energie, die zum Betrieb von Vorrichtungen benötigt wird, an oder in diesen Vorrichtungen in geeigneten Speichern mitzuführen. Beispielhaft sei hier ein Kraftfahrzeug genannt, das einen BleiAkkumulator enthält, der die für den Anlassvorgang erforderliche elektrische Energie bereitstellt. Ein weiteres Beispiel sind z. B. Mobiltelefone, die mit Akkumulatoren zum Bereitstellen der für den Betrieb benötigten Energie versehen sind. Bei diesen Beispielen geht es jedoch stets darum, von dem Gerät selbst benötigte Energie in geeigneter Weise mitzuführen.

Erfindungsgemäß ist hier gerade nicht der Speicher gemeint, der bei transportablen Geräten die Energie zur Verfügung stellt, sondern der Transport der Energie als solches, insbesondere über große Entfernungen.

Aufgabe der vorliegenden Erfindung ist es demgegenüber, eine Vorrichtung und ein Verfahren zum möglichst verlustarmen Transport elektrischer Energie über große Entfernungen anzugeben, so dass die Energie am Zielort zum Verbrauch außerhalb des Schiffs bereitsteht.

Diese Aufgabe wird gelöst durch ein Verfahren mit den Merkmalen nach Anspruch 1 sowie durch ein Schiff mit den Merkmalen nach Anspruch 8. Weitere vorteilhafte Weiterbildlungen der Erfindung sind in den Unteransprüchen ausgeführt.

Dabei liegt der Erfindung die Erkenntnis zugrunde, dass solche Speicher zwar stets mit einer Masse behaftet sind, die im Falle eines Blei-Akkumulators beträchtlich ist, dass dieser Nachteil jedoch bei einem Transport über sehr große Entfernungen bei einer entsprechend groß bemessenen Transportkapazität gegenüber den Möglichkeiten des Transportes einer sehr großen Energiemenge als elektrische Energie über Leiter und den damit verbundenen Verlusten in den Hintergrund tritt.

In einer bevorzugten Ausführungsform der Erfindung sind als Speicherelemente Akkumulatoren und/oder Kondensatoren vorgesehen. Diese sind gängige Speicherelemente und sind auch in großen Stückzahlen verfügbar. Auch ein Einsatz im Fall einer Beschädigung ist damit sicher möglich.

Besonders bevorzugt sind mehrere Speicherelemente mechanisch und/oder elektrisch zu Speichergruppen zusammengefasst. Durch diese Zusammenfassung können sie einerseits gleichzeitig aufgeladen bzw. entladen werden und/oder im Falle eines Austausches als gesamte Gruppe gehandhabt werden, ohne dass jedes Speicherelement einzeln gehandhabt werden muß. Dies ist besonders vorteilhaft, wenn der Speicher aus einer sehr großen Anzahl von Speicherelementen besteht, so dass der Zugang zu einem einzelnen Speicherelement sehr aufwändig ist. In diesem Fall kann eine Speichergruppe, in der das gesucht Speicherelement enthalten ist, schnell aus dem Speicher entfernt und durch eine neue, einwandfreie Speichergruppe ersetzt werden. Das Schiff kann dann mit allenfalls einer geringen Verzögerung seine Fahrt antreten.

Um ein zügiges Aufladen bzw. Entladen eines erfindungsgemäßen Speichers zu ermöglichen, sind bevorzugt ortsfeste Stationen vorgesehen, bei denen Zwischenspeicher angeordnet sind. So kann ein Schiff seine Ladung zunächst an diesen Zwischenspeicher abgeben und sogleich die Station wieder verlassen, um weitere Ladungen aufzunehmen. Von der Station bzw. dem Zwischenspeicher aus kann die Energie dann bei Bedarf weitergeleitet und in ein Netz eingespeist werden.

Ein einer bevorzugten Ausführungsform der Erfindung kann ein Sammelanschluss für eine Mehrzahl von Speicherelementen und/oder Speichergruppen vorgesehen sein. Dadurch können mehrere Speicherelemente bzw. Speichergruppen gleichzeitig aufgeladen/entladen werden, wobei die Zeit zum Herstellen der elektrischen Anschlüsse zu jedem einzelnen Speicherelement eingespart werden kann.

Insbesondere, wenn als Speicherelemente Akkumulatoren verwendet werden, die eine Elektrolytflüssigkeit enthalten, kann ein beträchtlicher Teil des Gewichtes des Speichers eingespart werden durch Entnehmen der Flüssigkeit, so dass die Flüssigkeit während des Transportes nicht in den Akkumulatoren enthalten ist. Dazu weist jedes Speicherelement bevorzugt eine Öffnung auf. Dadurch verringert sich die benötigte Antriebsleistung oder bei voller Ausnutzung der Tragfähigkeit des Schiffs steigt die Menge Energie, die transportiert werden kann.

Um nicht an jedem einzelnen Speicherelement die Flüssigkeit separat ablassen zu müssen, können die Öffnungen mehrerer Speicherelemente miteinander durch Sammelleitungen verbunden sein. Dadurch ergibt sich auch eine Zeitersparnis beim Auffüllen bzw. Ablassen der Flüssigkeit.

Wenn die Flüssigkeit beim Ablassen zunächst in einem Behälter an Bord des Schiffs gesammelt wird, kann diese nach dem Ablassen der Flüssigkeit aus den Speicherelementen mit diesem Behälter in einem Arbeitsgang von Bord genommen bzw. vor dem Auffüllen der Speicherelemente in einem Arbeitsgang an Bord gegeben werden und Vor- bzw. Nachbehandlungen können unabhängig von dem Fahrzeug ausgeführt werden, und ohne dessen Fahrplan zu beeinflussen. Wenn das Fahrzeug zum Transport eines Batterie-Speichers z. B. ein Schiff ist, kann dieses Schiff nach der Aufladung des Speichers bereits ablegen und die Reise zum Zielhafen antreten, während der Elektrolyt aus den Batterien abgelassen und in einem (oder mehreren) Behälter gesammelt wird.

Sobald der Elektrolyt aus allen Speicherelementen abgelassen ist, kann dieser Behälter z. B. mit bordeigenem Ladegeschirr auf ein anderes Schiff übergeben werden, das die Flüssigkeit zur Aufbereitung und Lagerung zurück an Land bringt. Bei geeigneter Behälterdimensionierung kann diese Aufgabe auch von einem Fluggerät wie z. B. einem Hubschrauber erfüllt werden.

Eine Vor- bzw. Nachbehandlung kann z. B. eine Reinigung der Flüssigkeit sein, um Schwebstoffe zu entfemen. Auf diese Weise werden Akkumulatoren stets mit einem sauberen Elektrolyten befüllt und der mit zunehmender Lebensdauer die Akkumulatoren bzw. deren Leistungsfähigkeit einschränkende Schlamm kann sich nicht ablagern. Dadurch wird die Lebensdauer der Speicherelemente bei hoher Kapazität erhöht.

Vorteilhafte Ausführungsformen der Erfindung sind in den Unteransprüchen angegeben.

Nachfolgend wird ein Ausführungsbeispiel der Erfindung anhand der Zeichnungen näher erläutert. Dabei zeigen:
Figur 1 einen erfindungsgemäßen Speicher an Bord eines Schiffes;
Figur 2 eine erfindungsgemäße Ausführungsform einer Speichergruppe; und
Figur 3 eine vereinfachte Darstellung des Ablaufs des erfindungsgemäßen Energietransportes.

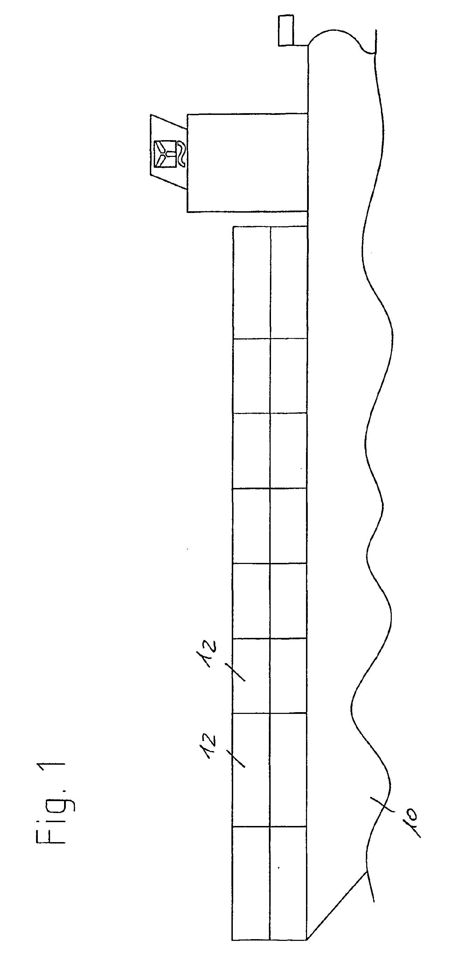

Figur 1 zeigt ein Schiff 10 als Transportfahrzeug für einen erfindungsgemäßen Speicher. Dieser Speicher ist aus einer Vielzahl von Speicherelementen aufgebaut, die gruppenweise in Behältern 12 zusammengefasst sind. Diese Behälter 12 können z. B. handelsübliche Container sein, die auf bekannten und verfügbaren Containerschiffen sowohl unter Deck, in Frachträumen, als auch als Deckslast transportiert werden können. Auf diese Weise lassen sich mit einem solchen Schiff 10 beträchtliche Mengen an Speicher transportieren.

Um die Speicher aufzuladen oder zu entladen ist es ausreichend, an der Außenseite jedes Containers 12 einen entsprechenden Anschluss vorzusehen. Sollten sich Speicherelemente als defekt herausstellen, kann mit Standard-Ladehilfen wie Containerbrücken oder Container-Spreadem der betreffende Container 12 mit dem defekten Speicher in kurzer Zeit entladen und durch einen Ersatz-Container ersetzt werden, so dass die Liegezeit des Schiffes 10 auch dann, wenn der Austausch von Speicherelementen erforderlich ist, nicht nennenswert verlängert wird. Entsprechend können z. B. bei Akkumulatoren als Speicherelementen die ElektrolytFlüssigkeiten über Sammelleitungen jeweils containerweise aufgefüllt bzw. abgelassen werden, um so das Gewicht des Speichers während der Reise zu verringern.

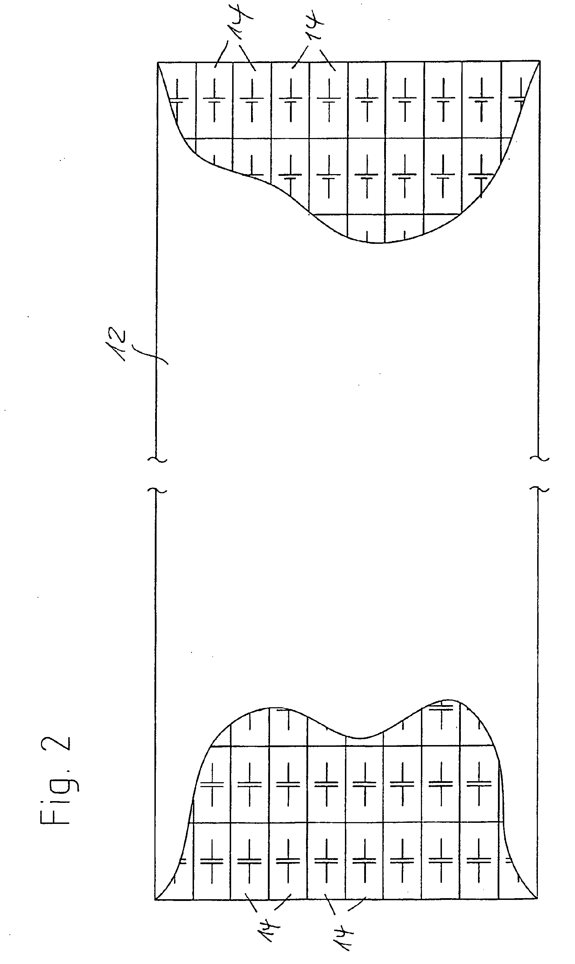

Figur 2 zeigt einen solchen Container 12 teilweise aufgerissen mit darin raumfüllend angeordneten Speicherelementen 14. Im linken Teil der Figur sind diese als Kondensatoren wie z. B. Ultracaps mit hoher Kapazität dargestellt. Im rechten Teil der Figur sind diese als Akkumulatoren, z. B. Blei-Akkumulatoren, dargestellt. Dies verdeutlicht die vielfältigen Möglichkeiten, den Speicher aufzubauen. Natürlich können grundsätzlich alle geeigneten Speicherelemente 14 verwendet werden.

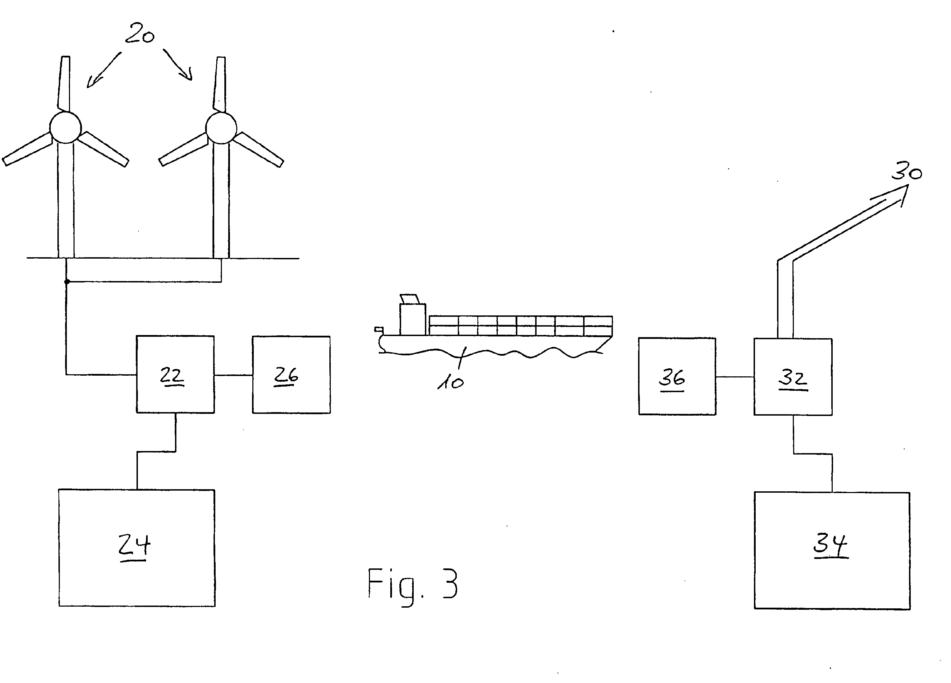

In Figur 3 ist das erfindungsgemäße Verfahren dargestellt. Im linken Teil der Figur sind Windenergieanlagen 20 dargestellt, die kontinuierlich elektrische Energie erzeugen. Diese elektrische Energie wird über eine Steuerung 22 in einem Zwischenspeicher 34 gespeichert. Soll nun ein Schiff 10 bzw. dessen Speicher aufgeladen werden, werden die Speicher mit der Anschlussstation 26 verbunden und die Steuerung 22 bewirkt einen Stromfluss von dem Zwischenspeicher 24 und oder den Windenergieanlagen 20 zu der Anschlussstation 26 und zu dem Speicher an Bord des Schiffes 10.

Sobald der Speicher an Bord des Schiffes 10 aufgeladen ist, kann im Fall von Blei-Akkumulatoren der Elektrolyt abgelassen und gereinigt und sodann in einem Tank gelagert werden. Das Schiff 10 kann dann mit aufgeladenen Speichern aber ohne Elektrolyt seinen Zielhafen ansteuern. Dort wird es wiederum an eine AnschlussStation 36 angeschlossen. Bei Bedarf kann wiederum dort gelagerter Elektrolyt auf die Blei-Akkumulatoren aufgefüllt werden und der Entladevorgang beginnt. Dabei ist wiederum eine Steuerung 32 vorgesehen, die den Stromfluss von dem Speicher zunächst in einen Zwischenspeicher 34 und/oder sogleich in ein Netz 30 bewirkt, in welchem die elektrische Energie dann verbraucht werden kann.

Für die Rückreise kann dann dem inzwischen entladenen Speicher der Elektrolyt wieder entnommen werden.

## Patentansprüche

1. Verfahren zum Transportieren elektrischer Energie mittels eines Schiffs (10),
wobei das Schiff (10) einen elektrischen Speicher als Nutzlast trägt, **gekennzeichnet durch** die Schritte:
- Erzeugen der elektrischen Energie mittels Windenergieanlagen;
- Speicherung der erzeugten elektrischen Energie in einem Zwischenspeicher (24);
- Laden der elektrischen Energie von dem Zwischenspeicher (24) in dem elektrischen Speicher des Schiffs (10);
- Ansteuern des Schiffs (10) zu einem Zielort;
- Entladung des Speichers am Zielort, so dass die elektrische Energie zum Verbrauch außerhalb des Schiffs am Zielort bereitsteht.

2. Verfahren nach Anspruch 1,
**dadurch gekennzeichnet, dass** nach Laden der elektrischen Energie in den Speicher, aber vor dem Transport des Speichers zum Ziel eine in dem Speicher enthaltene Flüssigkeit entnommen wird, und dass nach dem Transport des Speichers zum Ziel, aber vor dem Entnehmen der elektrischen Energie Flüssigkeit in den Speicher eingefüllt wird.

3. Verfahren nach Anspruch 2,
**dadurch gekennzeichnet, dass** die Flüssigkeit nach der Entnahme aber vor der Lagerung gereinigt wird.

4. Verfahren nach einem der Ansprüche 1 oder 3,
**dadurch gekennzeichnet, dass** der Behälter nach der Abfahrt des Schiffs mit der eingeleiteten Flüssigkeit von Bord des Schiffs (10) genommen wird bzw. vor Ankunft des Schiffs (10) an Bord des Schiffs gebracht wird.

5. Verfahren nach einem der Ansprüche 1 bis 4,
**dadurch gekennzeichnet, dass** eine Einrichtung zur Überwachung bzw. Steuerung die Anzahl der Lade/Entlade-Zyklen für jedes Speicherelement (14) erfasst und bei Erreichen einer vorgegebenen Anzahl von Zyklen eine entsprechende Mitteilung ausgibt.

6. Verfahren nach einem der Ansprüche 1 bis 5,
**gekennzeichnet durch** ortsfeste Stationen (22, 26; 32, 36), die zum Aufladen bzw. Entladen des Speichers und/oder Umwandeln der elektrischen Energie mit dem elektrischen Speicher des Schiffes verbunden werden.

7. Verfahren nach einem der vorstehenden Ansprüche 1 bis 6,
**dadurch gekennzeichnet, dass**
der Zwischenspeicher (24) bei den Stationen (22, 26) zum Zwischenspeichern der elektrischen Energie ausgebildet ist und mittels einer Steuerung (22) ein Stromfluss von dem Zwischenspeicher (24) und/oder den Windenergieanlagen (10) zu den ortsfesten Stationen (22, 26) und dem elektrischen Speicher an Bord des Schiffes (10) bewirkt wird.

8. Schiff zur Durchführung des Verfahrens zum Transportieren elektrischer Energie nach einem der Ansprüche 1 bis 7,
**gekennzeichnet durch** einen aus einer Mehrzahl von Speicherelementen (14) gebildeten Speicher, in dem die elektrische Energie gespeichert ist, die **durch** die
Windenergieanlagen (20) erzeugt worden ist, und zur Entladung am Zielort bereitsteht,
wobei der Speicher als Nutzlast auf und/oder in dem Schiff (10) angeordnet ist,
wobei bei der Abgabe der elektrischen Energie zum Verbrauch außerhalb des Schiffs der Speicher auf und/oder in dem Schiff verbleibt und das Schiff einen Anschluss zur Übertragung der gespeicherten elektrischen Energie bei der Entladung zum Verbrauch außerhalb des Schiffs aufweist.

9. Schiff nach Anspruch 8,
**gekennzeichnet durch** Akkumulatoren und/oder Kondensatoren als Speicherelemente (14).

10. Schiff nach einem der vorstehenden Ansprüche 8 oder 9,
**gekennzeichnet durch** mechanisch und/oder elektrisch zu Speichergruppen (12) zusammengefasste Speicherelemente (14).

11. Schiff nach einem der vorstehenden Ansprüche 8 bis 10,
**gekennzeichnet durch** wenigstens einen elektrischen Sammelanschluss für eine Mehrzahl von Speicherelementen (14) und/oder Speichergruppen (12).

12. Schiff nach einem der vorstehenden Ansprüche 8 bis 11,
**gekennzeichnet durch** wenigstens eine Öffnung in jedem Speicherelement (14) zum Auffüllen bzw. Ablassen einer Flüssigkeit.

13. Schiff nach Anspruch 11,
**gekennzeichnet durch** eine oder mehrere Sammelleitungen, welche die Öffnungen der Speicherelemente (14) miteinander verbinden.

14. Schiff nach Anspruch 13,
**dadurch gekennzeichnet, dass** die Sammelleitung in einen Behälter an Bord des Schiffs (10) mündet.

15. Schiff nach einem der vorstehenden Ansprüche 8 bis 14,
**gekennzeichnet durch** eine Einrichtung zur Überwachung einzelner Speicherelemente (14) und/oder zur Steuerung des Lade/Entlade-Vorgangs und/oder Zuführung bzw. Entnahme von Flüssigkeit.

16. Schiff nach Anspruch 15,
**dadurch gekennzeichnet, dass** die Einrichtung zur Steuerung bzw. Überwachung den Betriebszustand einzelner Speicherelemente und/oder Speichergruppen aufzeigt.

17. Schiff nach einem der Ansprüche 15 oder 16,
**dadurch gekennzeichnet, dass** die Einrichtung zur Überwachung bzw. Steuerung an Bord des Schiffs (10) angeordnet ist.

18. Schiff nach einem der Ansprüche 15 bis 17,
**dadurch gekennzeichnet, dass** die Einrichtung wenigstens einen Mikroprozessor und einen Speicher enthält.

## Claims

1. A method for transporting electrical energy by means of a ship (10), the ship (10) carrying an electrical storage device as payload,
**characterised by** the steps of:
- generating the electrical energy by means of wind power installations;
- storing the generated electrical energy in an intermediate storage device (24);
- charging the electrical energy from the intermediate storage device (24) in the electrical energy storage device of the ship (10);
- steering the ship (10) to a destination;
- discharging the storage device at the destination, so that the electrical energy is available for consumption outside the ship at the destination.

2. A method according to claim 1,
**characterised in that**, after charging of the electrical energy into the storage device but before transport of the storage device to the destination, a fluid held in the storage device is removed and that, after transport of the storage device to the destination but before the removal of the electrical energy, fluid is introduced into the storage device.

3. A method according to claim 2,
**characterised in that** the fluid is cleaned after removal but before storage.

4. A method according to either of claims 1 and 3,
**characterised in that** the container is taken off the ship (10) after departure of the ship with the introduced fluid and is brought on board the ship before arrival of the ship (10).

5. A method according to any one of claims 1 to 4,
**characterised in that** a device for monitoring and control detects the number of charging/discharging cycles for each storage element (14) and, when a predefined number of cycles is reached, outputs a corresponding notification.

6. A method according to any one of claims 1 to 5,
**characterised by** fixed stations (22, 26; 32, 36) which are connected to the electrical storage device of the ship for charging and discharging the storage device and/or converting the electrical energy.

7. A method according to any one of the preceding claims 1 to 6,
**characterised in that**
the intermediate storage device (24) in the case of the stations (22, 26) is configured for intermediate storage of the electrical energy and, by means of a controller (22), a current is caused to flow from the intermediate storage device (24) and/or from the wind power installations (10) to the fixed stations (22, 26) and the electrical storage device on board the ship (10).

8. A ship for carrying out the method for transporting electrical energy according to any one of claims 1 to 7,
**characterised by** a storage device formed by a plurality of storage elements (14), in which storage device the electrical energy generated by the wind power installations (20) is stored and is available for discharging at the destination,
wherein the storage device is disposed on and/or in the ship (10) as payload,
wherein upon delivery of the electrical energy for consumption outside the ship the storage device remains on and/or in the ship and the ship has a connection for transferring the stored electrical energy upon discharging for consumption outside the ship.

9. A ship according to claim 8,
**characterised by** accumulator batteries and/or capacitors as storage elements (14).

10. A ship according to either of the preceding claims 8 and 9,
**characterised by** storage elements (14) that are mechanically and/or electrically combined to form storage device groups (12).

11. A ship according to any one of the preceding claims 8 to 10,
**characterised by** at least one electrical collective connection for a plurality of storage elements (14) and/or storage device groups (12).

12. A ship according to any one of the preceding claims 8 to 11,
**characterised by** at least one orifice in each storage element (14) for filling with and draining off a fluid.

13. A ship according to claim 11,
**characterised by** one or more collective conduits which connect the orifices of the storage elements (14) to one another.

14. A ship according to claim 13,
**characterised in that** the collective conduit opens into a container on board the ship (10).

15. A ship according to any one of the preceding claims 8 to 14,
**characterised by** a device for monitoring individual storage elements (14) and/or for controlling the charging/discharging operation and/or supply and removal of fluid.

16. A ship according to claim 15,
**characterised in that** the device for controlling and monitoring displays the operating condition of individual storage elements and/or storage device groups.

17. A ship according to either of claims 15 and 16,
**characterised in that** the device for monitoring and controlling is disposed on board the ship (10).

18. A ship according to any one of claims 15 to 17,
**characterised in that** the device contains at least a microprocessor and a memory.

## Revendications

1. Procédé de transport d'énergie électrique au moyen d'un navire (10),
dans lequel le navire (10) transporte une unité de stockage d'électricité en tant que charge utile, **caractérisé par** les étapes consistant à :
- générer l'énergie électrique au moyen d'installations éoliennes ;
- stocker l'énergie électrique générée dans une unité de stockage intermédiaire (24) ;
- charger l'énergie électrique depuis l'unité de stockage intermédiaire (24) dans l'unité de stockage d'électricité du navire (10) ;
- faire mettre au navire (10) le cap vers un lieu de destination ;
- décharger l'unité de stockage sur le lieu de destination, de sorte que l'énergie électrique est prête à être consommée en dehors du navire sur le lieu de destination.

2. Procédé selon la revendication 1,
**caractérisé en ce qu'**après la charge de l'énergie électrique dans l'unité de stockage, mais avant le transport de l'unité de stockage vers la destination un liquide contenu dans l'unité de stockage est extrait, et **en ce qu'**après le transport de l'unité de stockage vers la destination, mais avant l'extraction de l'énergie électrique un liquide est versé dans l'unité de stockage.

3. Procédé selon la revendication 2,
**caractérisé en ce que** le liquide est purifié après l'extraction mais avant la charge.

4. Procédé selon l'une des revendications 1 ou 3,
**caractérisé en ce que** le réservoir après le départ du navire avec le liquide introduit est prélevé à bord du navire (10) ou est amené à bord du navire avant l'arrivée du navire (10).

5. Procédé selon l'une des revendications 1 ou 4,
**caractérisé en ce qu'**un système de surveillance ou de commande détecte le nombre de cycles de charge/décharge pour chaque élément de stockage (14) et envoie un message correspondant lorsqu'un nombre prédéterminé de cycles est atteint.

6. Procédé selon l'une des revendications 1 à 5,
**caractérisé par** des stations fixes (22, 26 ; 32, 36) qui sont raccordées à l'unité de stockage d'électricité du navire pour charger ou décharger l'unité de stockage et/ou transformer l'énergie électrique.

7. Procédé selon l'une des revendications précédentes 1 à 6,
**caractérisé en ce que**
l'unité de stockage intermédiaire (24) est configurée pour le stockage intermédiaire intermédiaire de l'énergie électrique au niveau des stations (22, 26) et au moyen d'une commande (22) un flux de courant est produit depuis l'unité de stockage intermédiaire (24) et/ou les installations éoliennes (10) vers les stations fixes (22, 26) et l'unité de stockage d'électricité à bord du navire (10).

8. Navire pour la réalisation du procédé de transport d'énergie électrique selon l'une des revendication 1 à 7,
**caractérisé par** une unité de stockage formée par une pluralité d'éléments de stockage (14), unité de stockage dans laquelle l'énergie électrique est stockée, laquelle est générée par le biais des installations éoliennes (20), et qui est prête pour être déchargée sur le lieu de destination,
dans lequel l'unité de stockage est agencée en tant que charge utile sur et/ou dans le navire (10),
dans lequel lorsque l'énergie électrique est distribuée pour être consommée en dehors du navire l'unité de stockage reste sur et/ou dans le navire et le navire présente un raccordement pour la transmission de l'énergie électrique stockée lors de la décharge pour la consommation en dehors du navire.

9. Navire selon la revendication 8,
**caractérisé par** des accumulateurs et/ou des condensateurs en tant qu'éléments de stockage (14).

10. Navire selon l'une des revendications précédentes 8 ou 9,
**caractérisé par** des éléments de stockage (14) réunis mécaniquement et/ou électriquement avec des groupes de stockage (12).

11. Navire selon l'une des revendications précédentes 8 à 10,
**caractérisé par** au moins un raccordement de collecte électrique pour une pluralité d'éléments de stockage (14) et/ou de groupes de stockage (12).

12. Navire selon l'une des revendications précédentes 8 à 11,
**caractérisé par** au moins une ouverture dans chaque élément de stockage (14) pour le remplissage ou l'évacuation d'un liquide.

13. Navire selon la revendication 11,
**caractérisé par** une ou plusieurs lignes collectrices qui relient les ouvertures des éléments de stockage (14) entre elles.

14. Navire selon la revendication 13,
**caractérisé en ce que** la ligne collectrice débouche dans un réservoir à bord du navire (10).

15. Navire selon l'une des revendications précédentes 8 à 14,
**caractérisé par** un système de surveillance d'éléments de stockage individuels (14) et/ou de commande du processus de charge/décharge et/ou d'amenée ou d'extraction de liquide.

16. Navire selon la revendication 15,
**caractérisé en ce que** le système de commande ou de surveillance indique l'état opérationnel d'éléments de stockage individuels et/ou de groupes de stockage.

17. Navire selon l'une des revendications 15 ou 16,
**caractérisé en ce que** le système de surveillance ou de commande est agencé à bord du navire (10).

18. Navire selon l'une des revendications 15 à 17,
**caractérisé en ce que** le système contient au moins un microprocesseur et une mémoire.
